# EUROPÄISCHE PATENTSCHRIFT

(11) **EP 1 099 314 B1**
(45) Veröffentlichungstag und Bekanntmachung des Hinweises auf die Patenterteilung: **09.04.2003**
(21) Anmeldenummer: 99944249.4
(22) Anmeldetag: 01.07.1999
(51) Int. Cl.: H04B 1/707

(54) **AKQUISITIONSVERFAHREN UND ANORDNUNG ZUR DURCHFÜHRUNG DES VERFAHRENS**
ACQUISITION METHOD AND DEVICE FOR CARRYING OUT SAID METHOD
PROCEDE D'ACQUISITION ET DISPOSITIF POUR METTRE EN OEUVRE LEDIT PROCEDE

(30) Priorität: 21.07.1998 DE 19832851
(43) Veröffentlichungstag der Anmeldung: 16.05.2001
(73) Patentinhaber: Infineon Technologies AG, 81669 München (DE)
(72) Erfinder: GUNZELMANN, Bertram, D-86163 Augsburg (DE); MOLEV-SHTEIMAN, Arkadi, 58001 Azor (IL)
(74) Vertreter: Lange, Thomas, Dr.
(86) Internationale Anmeldenummer: DE9901980
(87) Internationale Veröffentlichungsnummer: WO00005822

(56) Entgegenhaltungen:
- EP-A- 0 661 830
- EP-A- 0 749 223
- EP-A- 0 852 432
- US-A- 5 768 306

## Beschreibung

Die Erfindung betrifft ein Akquisitionsverfahren, bei welchem eine empfangene, kodierte Spreizfolge der Länge m Bit mit einer lokal erzeugten Spreizfolge m-mal jeweils um ein Bit verzögert zur Bildung von m Korrelationsantworten korreliert wird. Die Erfindung betrifft ferner eine Anordnung zur Durchführung des Verfahrens.

Ein grundlegendes Spreizverfahren ist das Direct-Sequence-Verfahren. Dabei wird eine Nachricht vor der Sendung bitweise zeitlich stark gestreckt und mit einer pseudozufälligen Binärfolge moduliert. Der Empfänger kann aus dem dabei entstehenden Pseudorauschsignal bei Kenntnis der Binärfolge die Nachricht extrahieren.

Derartige Verfahren werden in der Datenkommunikation, Ortung und Navigation eingesetzt. Dabei besteht das Problem, daß ein Empfänger von mehreren Sendern Signale empfängt und dann zur Identifizierung der Signale die zeitliche Lage der Signale bestimmt werden muß.

Ein wichtiges Einsatzgebiet für ein derartiges Verfahren ist insbesondere die Echtzeit-Satelliten-Navigation nach dem System NAVSTAR GPS (Navigation System With Timing And Ranging, Global Positioning System). Hier dienen eine Vielzahl von Satelliten
als Sendernetz, die von Boden- oder Kontrollstationen gesteuert werden. Für eine dreidimensionale Ortsbestimmung eines Empfängers müssen wenigstens vier Satelliten im Sichtfeld des Empfängers sein. Die Nachrichten der Sender werden im Empfänger entschlüsselt, um daraus die notwendigen Berechnungen anzustellen. Damit ein Empfänger einen Satelliten identifizieren und dessen Informationen auswerten kann, muß er einen senderspezifischen Code (Gold-Code) kennen, der als periodische Signalfolge vorgegebener Länge übertragen wird. Zum Auffinden des Codes werden im Empfänger alle Codes der Satelliten gespeichert. Üblicherweise wird dann zunächst der Code eines beliebigen Satelliten erzeugt und mit dem empfangenen Code verglichen. Falls es sich nicht um den erwarteten Satelliten handelt - was in der Regel der Fall ist - müssen Vergleiche mit den abgespeicherten Codes so lange durchgeführt werden, bis Übereinstimmung festgestellt wird.

Da ferner die Phasenlage jedes ankommenden Signals nicht bekannt ist, muß das Signal mit dem empfangenen Code so lange verschoben werden, bis gegebenenfalls Übereinstimmung festgestellt wird. Der Vergleich erfolgt über die Korrelationsfunktion des Signals, welches nahezu 1023 wird, wenn Synchronisation besteht. Wenn man für diesen Suchvorgang alle möglichen Varianten berücksichtigt, müssen grundsätzlich lange Suchzeiten in Kauf genommen werden.

Der Gold-Code-Spreizfolge von 1023 Bits entsprechend muß ein Suchraster mit 1023 Suchzellen überprüft werden, wobei ein zeitlicher Abstand zweier Suchzellen von einer Bitbreite vorgegeben ist. Es wird dadurch eine Auflösung von ½ Bitbreite erreicht. Bei optimaler Synchronisation ist der Abtastzeitpunkt so gewählt, daß die maximale Amplitude der Korrelationsantwort (vergleiche Figur 2) erhalten wird. Hier wird auch das maximale Signal/Rauschverhältnis erreicht. Im Vergleich dazu kann im schlechtesten Fall die Signal-Leistung bis auf ein Viertel zurückgehen.

Ein bekanntes Verfahren zur Minderung dieser Leistungsreduktion besteht darin das Suchraster zu verfeinern, indem der zeitliche Abstand der Such-Positionen auf die Hälfte oder ein Viertel verringert wird. Auf diese Weise muß aber die Zahl der Suchvorgänge verdoppelt oder vervierfacht werden, so daß die Akquisitionszeit deutlich verlängert wird.

Der Erfindung liegt die Aufgabe zugrunde, ein Verfahren und eine Anordnung der eingangs genannten Art anzugeben, mit welchem die Akquisitionszeit verringert wird.

Diese Aufgabe wird dadurch gelöst, daß jede Korrelationsantwort verzögert und mit einer folgenden Korrelationsantwort zur Bildung eines Korrelationsergebnisses aufsummiert wird, daß die Verzögerung ein ganzzahliges Vielfaches i (i = 0, 1, 2 ...) von m und eines weiteren Bits ist, und daß eine Maximumsuche über alle m Korrelationsergebnisse durchgeführt wird. Für i > 0 garantiert das Verfahren nur für nicht datenmodulierte Spreizsequenzen optimale Ergebnisse.

Ein Grundgedanke der Erfindung liegt demnach darin, daß zwei benachbarte Suchzellen miteinander verknüpft werden. Man erhält auf diese Weise eine Kurvenform des Korrelationsergebnisses, die gegenüber der herkömmlichen Kurvenform in dem entscheidenden oberen Bereich verbreitert ist. Die Verbreiterung beträgt eine Bitbreite und es entsteht durch die Verbreiterung keine Signal-Leistungsverschlechterung. Auf diese Weise ist die Amplitude der Korrelationsantwort unabhängig von einer exakten Synchronisation der Abtastzeit und des Suchrasters. Dabei wird das Signal/Rauschverhältnis im Vergleich zu dem oben beschriebenen schlechtesten Fall deutlich verbessert.

Eine bevorzugte Weiterbildung der Erfindung besteht darin, daß die lokal erzeugte Spreizfolge ein Abschnitt der gesendeten Spreizfolge ist.

Auf diese Weise wird eine weitere Verbesserung der Akquisitionszeit, insbesondere bei langen Spreizfolgen, erreicht.

Anordnungsmäßig wird die Aufgabe mit einfachen schaltungstechnischen Mitteln dadurch gelöst, daß der Ausgang eines Korrelators mit einem ersten Eingang eines Addierers verbunden ist, und daß der Ausgang des Korrelators über ein Verzögerungsglied mit einem zweiten Eingang des Addierers verbunden ist.

Nachfolgend wird die Erfindung anhand eines in der Zeichnung dargestellten Ausführungsbeispieles weiter beschrieben.
- Fig. 1: zeigt schematisch einen erfindungsgemäßen Empfänger für das GPS-Navigationssystem,
- Fig. 2: zeigt schematisch eine Korrelationsantwort des Empfängers gemäß Fig. 1 und
- Fig. 3: zeigt schematisch ein Korrelationsergebnis des Empfängers gemäß Fig. 1.

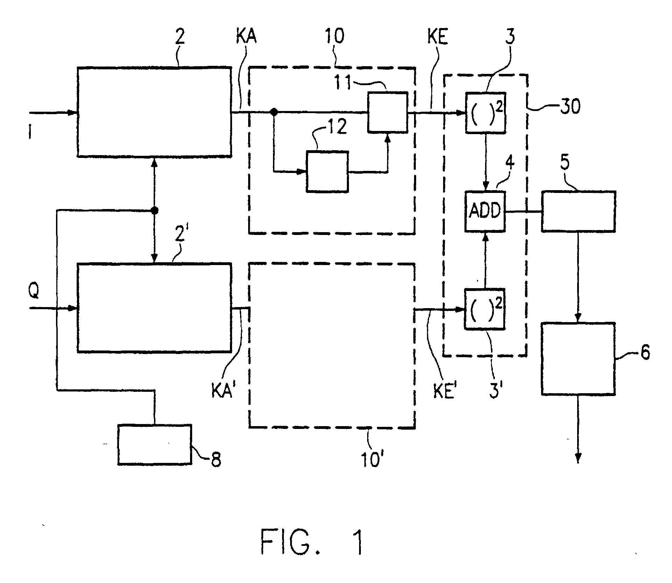

In Fig. 1 ist ein Empfänger zur Durchführung eines Spreizverfahrens dargestellt, wie er beispielsweise in der Datenkommunikation, im Mobilfunk sowie bei der Ortung und Navigation eingesetzt werden kann. Der Aufbau und die Funktion dieses Empfängers werden nachfolgend für die Anwendung im GPS-Ortungs- und Navigationssystems beschrieben, da die Operationen im wesentlichen typisch für die Operationen sind, die in allen anderen Empfängern für ein Spreizverfahren angewendet werden. Ein senderspezifisches Signal, der Gold-Code des betreffenden Satelliten, wird hierbei aus dem empfangenen Signal, welches neben dem Signal eines ganz bestimmten Senders noch die Informationen aller anderen wirksamen Sender enthält, aus dem Rauschpegel des gesamten Signals herausgefunden.

Das von einer Antenne (nicht dargestellt) als Spreizfolge kommende Gesamtsignal wird quadraturmoduliert und mit Hilfe eines Quadraturmodulators ins Basisband gemischt. Eine Quadraturkomponente Q und eine In-Phase-Komponente I werden mit je einem Analog/Digital-Wandler (nicht dargestellt) mit der Wortbreite 1 Bit quantisiert.

Die Signale werden dann in zwei Zweigen Korrelatoren 2 bzw. 2' gleicher Bauart zugeführt, in welchem jeweils der Gold-Code des zugehörigen Satelliten aus dem Rauschpegel des Gesamtsignals herausgefunden wird. An den Ausgängen der Korrelatoren 2, 2' sind als Ausgangssignale jeweils eine Korrelationsantwort KA bzw. KA' abgreifbar, wie sie in Fig. 2 veranschaulicht ist.

Die Korrelationsantworten KA, KA' werden in einer baugleichen Anordnung 10 bzw. 10' jeweils einer Verarbeitung unterzogen, die nachfolgend im einzelnen noch beschrieben wird. Die Ausgabesignale der Anordnungen 10, 10' werden als Korrelationsergebnis KE bzw. KE' einem Leistungsberechner 30 zugeführt, in welchem aus beiden Zweigen die Betragsquadrate in jeweils einer Einheit 3, 3' berechnet und in einem Addierer 4 aufsummiert werden. Aus dem auf summierten Signal wird in der Einheit 5 die Wurzel gezogen und schließlich wird zur Erhöhung der Sicherheit über das ermittelte Ergebnis in einem Akkumulator 6 die Signalstärke M-mal akkumuliert.

Ein Gold-Code-Generator 8 versorgt die Korrelatoren 2, 2' mit den bei der Suche in Frage kommenden Gold-Codes.

Da der erste Zweig mit Korrelator 2 und Anordnung 10 und der zweite Zweig mit Korrelator 2' und Anordnung 10' gleich sind und die Signale auf gleiche Weise verarbeitet werden, beschränkt sich die folgende Beschreibung auf den ersten Zweig. Sinngemäß gelten die Ausführungen auch für den zweiten Zweig.

Im Korrelator 2 wird auf bekannte Weise die empfangene Spreizfolge der Länge m Bit mit einer im Gold-Code-Generator 8 erzeugten Spreizfolge m-mal jeweils um ein Bit verzögert zur Bildung von m Korrelationsantworten korreliert.

Die am Korrelator 2 ausgangsseitig anliegende Korrelationsantwort KA besteht gemäß Fig. 2 bei optimalen Zeitverhältnissen (hier beispielshaft t = 4) aus einem Impuls mit maximaler Amplitudespitze, wenn volle Übereinstimmung zwischen der empfangenen Spreizfolge I und der vom Gold-Code-Generator 8 lokal erzeugten Spreizfolge einschließlich ihrer Phasenlage festgestellt wird. Typischerweise steigt die Kurve der Korrelationsantwort KA von OV bzw. fällt auf OV ab innerhalb ± 1 Bit.

Es ist anzumerken, daß dieser Kurvenverlauf einer Korrelationsantwort eines herkömmlichen Korrelators entspricht. Wenn man dabei das übliche Suchraster von einer Bitbreite voraussetzt, kann im schlechtesten Fall ein Offset von einem halben Bit von der optimalen Abtastzeit auftreten. Wie aus Fig. 2 für diesen Fall entnehmbar ist, würde durch einen derartigen Offset ein maximaler Leistungsverlust von 6 dB erzeugt.

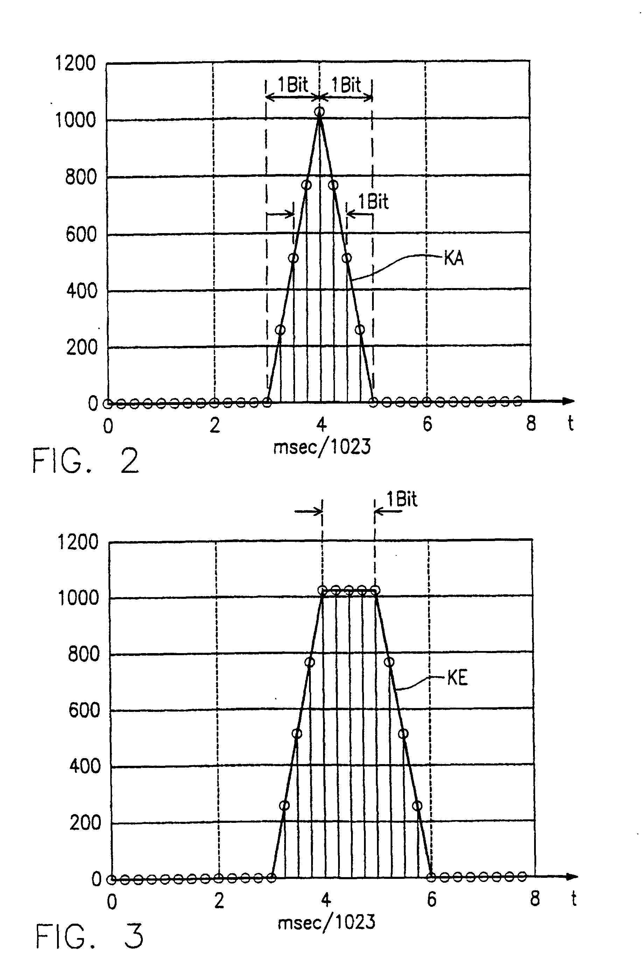

Zur Vermeidung eines derartigen Leistungsabfalls wird in der Anordnung 10 eine Mittelwertbildung aus den Korrelationsantworten KA von zwei benachbarten Suchzellen vorgenommen. Zu diesem Zweck wird jede Korrelationsantwort KA verzögert und mit der Korrelationsantwort KA der benachbarten Suchzelle zur Bildung des in Fig. 3 dargestellten Korrelationsergebnisses KE aufsummiert. Die Korrelationsantwort KA wird dazu einerseits direkt einem Eingang eines Addierers 11 und andererseits über ein Verzögerungsglied 12 einem anderen Eingang des Addierers 11 zugeführt.

Die Verzögerung im Verzögerungsglied beträgt wahlweise ein ganzzahliges Vielfaches i (i = 0, 1, 2, 3, ...) von m und eines weiteren Bits. Demnach werden abhängig von der gewählten Verzögerung die Korrelationsantworten KA von zwei unmittelbar benachbarten Bits oder von zwei benachbarten, aber in aufeinanderfolgenden Spreizfolgen vorhandenen Bits miteinander verknüpft. Letzterer Fall (i > 0) garantiert nur optimale Ergebnisse, wenn die Spreizfolge nicht datenmoduliert ist.

Gemäß Fig. 3 erhält man durch die Bildung des Korrelationsergebnisses KE eine maximale Amplitude der gleichen Höhe wie die der Korrelationsantwort KA gemäß Fig. 2, jedoch zusätzlich mit einer Verbreiterung im Bereich der maximalen Amplitude, die der Länge eines Suchrasterfeldes, d.h. 1 Bit, entspricht. Daher ist die Signalenergie innerhalb eines vollständigen Suchrasterfeldes gleich und die oben beschriebenen worst-case Parameter treffen nicht mehr zu. Die maximale Amplitude ist somit unabhängig vom genauen Zeitverhalten und trotzdem wird gegenüber dem oben beschriebenen schlechtesten Fall trotz Vergrößerung des Rauschens um 3 dB eine Verbesserung des Signal/Rauschverhältnisses erreicht.

## Patentansprüche

1. Akquisitionsverfahren, bei welchem
eine empfangene codierte Spreizfolge der Länge m Bit mit einer lokal erzeugten Spreizfolge m-mal jeweils um ein Bit verzögert zur Bildung von m Korrelationsantworten (KA) korreliert wird,
**dadurch gekennzeichnet,**
- **daß** jede Korrelationsantwort verzögert und mit einer folgenden Korrelationsantwort zur Bildung eines Korrelationsergebnisses (KE) aufsummiert wird,
- **daß** die Verzögerung ein ganzzahliges Vielfaches i (i = 0, 1, 2, 3, ...) von m und eines weiteren Bits ist, und
- **daß** eine Maximumsuche über alle m Korrelationsergebnisse durchgeführt wird.

2. Verfahren nach Anspruch 1,
**dadurch gekennzeichnet,**
**daß** die lokal erzeugte Spreizfolge ein Abschnitt der gesendeten Spreizfolge ist.

3. Anordnung zur Durchführung des Verfahren nach Anspruch 1,
**dadurch gekennzeichnet,**
**daß** der Ausgang eines Korrelators (2, 2') mit einem ersten Eingang eines Addierers (11) verbunden ist, und
**daß** der Ausgang des Korrelators (2, 2') über ein Verzögerungsglied (12) mit einem zweiten Eingang des Addierers (2, 2') verbunden ist.

## Claims

1. Acquisition method, in which
a received, coded spread sequence having a length of m bits is correlated with a locally generated spread sequence m times, in each case delayed by one bit, in order to form m correlation responses (KA),
**characterized**
- **in that** each correlation response is delayed and is added to a succeeding correlation response to form a correlation result (KE),
- **in that** the delay is an integer multiple i (i = 0, 1, 2, 3, ...) of m and of a further bit, and
- **in that** a maximum search is carried out over all m correlation results.

2. Method according to Claim 1,
**characterized**
**in that** the locally generated spread sequence is a section of the transmitted spread sequence.

3. Arrangement for carrying out the method according to Claim 1,
**characterized**
**in that** the output of a correlator (2,2') is connected to a first input of an adder (11), and
**in that** the output of the correlator (2,2') is connected to a second input of the adder (2,2') [sic] via a delay element (12).

## Revendications

1. Procédé d'acquisition dans lequel une séquence d'étalement reçue et codée d'une longueur de m bit est corrélée avec une séquence d'étalement produite localement retardée m-fois respectivement d'un bit pour la formation de m réponses (KA) de corrélation
**caractérisé**
- **en ce que** chaque réponse de corrélation est retardée et est additionnée à une réponse de corrélation suivante pour la formation d'un résultat (KE) de corrélation,
- **en ce que** le retard est un multiple i en nombre entier (i = 0, 1, 2, 3, ...) de m et d'un autre bit et,
- **en ce qu'**une recherche de maximum est effectuée sur tous les m résultats de corrélation.

2. Procédé suivant la revendication 1,
**caractérisé**
**en ce que** la séquence d'étalement produite localement est une partie de la séquence d'étalement envoyée.

3. Dispositif pour la mise en oeuvre du procédé suivant la revendication 1,
**caractérisé,**
**en ce que** la sortie d'un corrélateur (2, 2') est reliée à une première entrée d'un additionneur (11), et
**en ce que** la sortie du corrélateur (2, 2') est reliée par un élément (12) à retard à une deuxième entrée de l'additionneur (2,2').
